# EUROPÄISCHE PATENTSCHRIFT

(11) **EP 0 643 111 B1**
(45) Veröffentlichungstag und Bekanntmachung des Hinweises auf die Patenterteilung: **31.10.2001**
(21) Anmeldenummer: 94113888.5
(22) Anmeldetag: 05.09.1994
(51) Int. Cl.: C09D 5/44, C08L 63/00, C09D 163/00

(54) **Lösemittelfreie, wässrige Kunstharzdispersion**
Aqueous, solvent-free resin composition
Dispersion aqueuse de résine sans solvant

(30) Priorität: 13.09.1993 DE 4331061
(43) Veröffentlichungstag der Anmeldung: 15.03.1995
(73) Patentinhaber: HOECHST AKTIENGESELLSCHAFT, 65926 Frankfurt am Main (DE)
(72) Erfinder: Hönel, Michael, Dr., D-65189 Wiesbaden (DE); Schafheutle, Markus A., Dr., D-65239 Hochheim (DE); Völker, Achim, Dr., D-65197 Wiesbaden (DE); Walz, Gerd, Dr., D-65207 Wiesbaden (DE); Wehner, Susanne, D-65606 Villmar (DE); Ziegler, Peter, Dr., D-55130 Mainz (DE)
(74) Vertreter: Zounek, Nikolai, Dipl.-Ing.

(56) Entgegenhaltungen:
- EP-A- 0 049 369
- EP-A- 0 250 633
- EP-A- 0 424 713
- US-A- 4 639 299

## Beschreibung

Bei der Elektrotauchlackierung werden vorzugsweise solche Elektrotauchlacke eingesetzt, die als Bindemittel kationische, durch Amine modifizierte Epoxidharze als wasserlösliche Basisharzkomponente enthalten. Vernetzbar sind diese durch ankondensierte und/oder zugemischte mit Alkohol- und/oder Amino-Gruppen blockierte Polyisocyanate, die bei Raumtemperatur Urethan- und/oder Harnstoffgruppen (Verkappungsgruppen) aufweisen und bei erhöhten Temperaturen die Verkappungskomponenten abspalten und zu einer Vernetzung mit den freien Hydroxyl- bzw. Aminogruppen des Basisharz führen.

Zur Herstellung der einzelnen Bindemittelkomponenten müssen aus Viskositäts-oder Reaktivitätsgründen Lösemittel eingesetzt werden. So werden bei der Synthese der Basisharze vorzugsweise protische (Alkohole, Glykole) und aprotische Lösemittel wie Ketone, Ester oder Aromaten und bei der Synthese der Vernetzerkomponente aprotische Lösemittel verwendet.

Bekannterweise wird aber mit steigendem Lösemittelgehalt in KTL-Bädern der Umgriff (Hohlraumbeschichtung) verschlechtert, es treten Überbeschichtungen auf und Lösemittel gelangen vermehrt in das Abwasser und/oder die Abluft. Daher müssen die Lösemittel den Bindemitteln vor und/oder nach dem Dispergieren in Wasser z.B. durch Destillation oder Ultrafiltration entzogen werden. Dabei verbleibt verfahrensbedingt ein Teil der Lösemittel in den Dispersionen und es fallen, besonders beim sogenannten "Strippen" aus wäßriger Phase und beim Ultrafiltrieren größere Mengen eines Lösemittel-Wasser-Gemisches an, das entsorgt oder aufgearbeitet werden muß.

Aus US-A 4,639,299 sind selbstvernetzende wäßrige Beschichtungsmittel bekannt, erhältlich durch Copolymerisation von (a) polymerisierbaren blockierten Monoisocyanaten und (b) copolymerisierbaren Monomeren, wobei die Polymerisation in Gegenwart eines Epoxy-Amin-Adduktes (c) durchgeführt wird. Die EP-A 0 250 633 betrifft selbstvernetzende wäßrige Beschichtungsmittel erhältlich durch Copolymerisation von (a) speziellen polymerisierbaren blockierten Monoisocyanaten und (b) copolymerisierbaren Monomeren, wobei die Polymerisation in Gegenwart eines Epoxy-Amin-Adduktes (c) durchgeführt wird. EP-A 0 424 713 betrifft Härtungskomponenten für Lackbindemittel, die Hydroxyl- und/oder Aminogruppen aufweisen, wobei die Härtungskomponenten durch Umsetzung von halbblockierten Diisocyanaten mit einer Verbindung ausgewählt aus Polyamidoamin-Harzen, Polyaminen und (gegebenenfalls modifizierten) Epoxidharzen hergestellt werden. EP-A 0 049 369 beschreibt Bindemittelkombinationen bestehend aus Mischungen von (A) Umsetzungsprodukten von Epoxyacrylatestern mit basischen Monoisocyanaten, (B) Umsetzungsprodukten aus Epoxy-Amin-Addukten und ungesättigten Monoisocyanaten (aus Toluylendiisocyanat und einem Hydroxyalkyl(meth)acrylat) und (C) einem Halbester eines Dicarbonsäureanhydrids und einem N-Hydroxyalkyl-Oxazolidin sowie einem Amin-modifizierten Epoxyharz.

Es wurden nun verbesserte Kunstharzdispersionen gefunden, die Lackierungen ergeben mit einer guten Beständigkeit im Salzsprühtest und einer hohen Lösemittelbeständigkeit im Einschicht- und Mehrschichtaufbau, wobei die Dispersionen überraschenderweise im pH-Bereich von 5 bis 8 stabil sind.

Gegenstand der Erfindung sind lösemittelfreie, wäßrige Kunstharzdispersionen enthaltend ein Polymer A), das erhalten wird durch Polymerisation von
A1) verkappten Polyisocyanaten, wobei ein Teil der Verkappungsgruppen eine ethylenisch ungesättigte Gruppe enthält, und
A2) ethylenisch ungesättigten Monomeren,
   in Gegenwart eines ionischen Harzes B).

Gegenstand der Erfindung ist weiterhin ein Verfahren zur Herstellung dieser Kunstharzdispersionen. Dieses Verfahren besteht darin, daß man eine Mischung aus einem ionischen Harz und mindestens einem ethylenisch ungesättigten Monomer mit einem vollständig verkappten Polyisocyanat, wobei ein Teil der Verkappungsgruppen eine ethylenisch ungesättigte Gruppe trägt, vermischt, diese Mischung in eine wäßrige Dispersion überführt und anschließend sämtliche ethylenisch ungesättigten Gruppen mittels Emulsionspolymerisation polymerisiert.

Alternativ hierzu kann man auch so vorgehen, daß man die Mischung aus ionischem Harz und ethylenisch ungesättigtem Monomer neutralisiert, in Wasser dispergiert, zu dieser Dispersion das vollständig verkappte Polyisocyanat zugibt und anschließend sämtliche ethylenisch ungesättigten Gruppen polymerisiert.

Als ionisches Harz B) kommen sowohl anionische als auch kationische Harze in Frage, wobei kationische Harze aufgrund des besseren Umgriffvermögens und Korrosionsschutzes bevorzugt sind. Die kationischen Harze enthalten bevorzugt Gruppen mit einem aktiven Wasserstoffatom wie Hydroxyl-, primäre oder sekundäre Amino- oder Thiol-Gruppen. Diese Gruppen dienen als reaktive Zentren bei der Härtung des Lacks mit Vernetzungsmitteln wie beispielsweise blockierte Polyisocyanate bzw. im Falle von Aminogruppen auch zur Solubilisierung in Wasser durch Protonierung.

Bei der Komponente B) handelt es sich bevorzugt um ein durch Neutralisation mit organischen Säuren wasserverdünnbares Amino-Epoxidharz und/oder solche Carbonataminaddukte, die in DE 36 44 370 und EP 272 665 beschrieben sind. Solche Amino-Epoxidharze weisen im allgemeinen eine Aminzahl von 30 bis 200 (mg KOH pro g Festharze), eine Hydroxylzahl von 50 bis 500 (mg KOH pro g Festharz), eine mittlere Molmasse (Mn) von 25C bis 10000, bevorzugt 300 bis 5000 auf. Die untere Grenze der Aminzah! sollte bevorzugt 45, besonders bevorzugt 70, die obere Grenze dagegen sollte bevorzugt bei 150, besonders bevorzugt bei 100 liegen. Ist die Aminzahl zu niedrig, so ist die Löslichkeit zu gering oder es entstehen durch einen zu hohen Neutralisationsgrad zu saure pH-Werte in den Abscheidungsbädern. Ist die Aminzahl zu hoch, so bildet sich bei der Abscheidung ein schlecht haftender Film oder eine blasige Oberfläche.

Beispiele für Amino-Epoxidharze sind Umsetzungsprodukte von epoxidgruppenhaltigen Harzen mit vorzugsweise endständigen Epoxidgruppen aus den Gruppen Polyglycidylether, Polyglycidyiester und Polyglycidylamine mit gesättigten und/oder ungesättigten sekundären und/oder primären Aminen bzw. Aminoalkoholen. Diese können durch mindestens eine primäre und/oder sekundäre Hydroxylgruppe, durch die Dialkylaminogruppe und/oder durch eine primäre Aminogruppe, die durch Ketiminbildung vorübergehend geschützt wird, modifiziert sein.

Hydroxylgruppenhaltige Amino-Epoxidharze werden zweckmäßig aus Polyglycidylethern mit bevorzugt zwei 1,2-Epoxidgruppen pro Molekül erhalten. Unter Polyglycidylether im Rahmen dieser Erfindung werden vorzugsweise solche Polyglycidylether der allgemeinen Formel 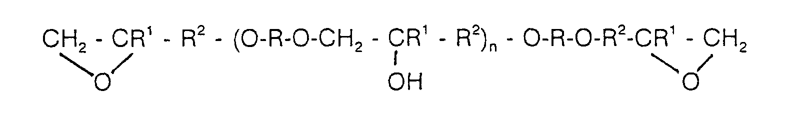 mit 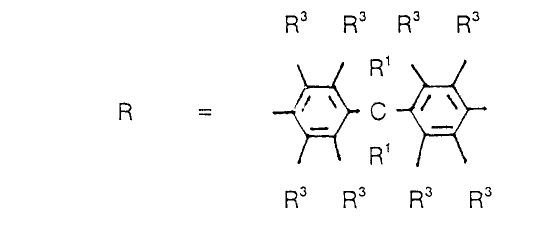 mit
R¹ = -H und/oder -CₘH₂ₘ₊₁
R² = -(CR¹)ₘ-, bevorzugt -CH₂-
R³ = -R¹, Halogen oder bevorzugt H
n = 0 bis 8, bevorzugt 1 bis 6
m = 1 bis 8, bevorzugt 1
verstanden.

Diese Polyglycidylether haben eine mittlere Molmasse (Mn) von etwa 300 bis 5000 und ein Epoxid-Äquivalentgewicht von etwa 170 bis 2500. Beispiele hierfür sind Umsetzungsprodukte von Epichlorhydrin oder Methylepichlorhydrin mit Dihydroxy-diphenylmethan (Bisphenol F) oder Dihydroxy-diphenylpropan (Bisphenol A), sowie mit Dihydroxy-benzophenon, Dihydroxy-naphthalin und/oder Resorcin. Polyepoxide mit geeignetem Molekulargewicht werden entweder durch Auswahl der Mol-Verhältnisse von Bisphenoi und Epichlorhydrin oder durch Reaktion der monomeren Diglycidylverbindungen mit weiterem Bisphenol unter Zusatz von Katalysatoren wie Lewis-Säuren oder Phosphoniumsalzen hergestellt.

Die Epoxidharze können vollständig oder teilweise hydriert sein oder in Gemischen mit unterschiedlicher Struktur und Molmasse eingesetzt werden. Weiterhin kann zum Elastifizieren ein Teil des beschriebenen Polyglycidylethers durch aliphatische Polyglycidylether der Formel 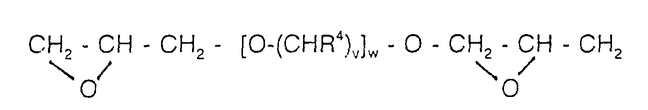 ersetzt werden, wobei
- R⁴: H oder ein niedriger, gegebenenfalls mit verschiedenen Substituenten versehener Alkylrest ist und
- v: Zahlen von 2 bis 6 und
- W: Zahlen von 5 bis 50 bedeuten.

Beispiele sind Glycidylether von Bisphenol A- und Bisphenol F- Polypropylenglykol- und Polyethylenglykolethern (mit verschiedenem Molekulargewicht). Die modifizierten Epoxidharze können auch durch Reaktion mit langkettigen Polyalkoholen wie Hexandiol-1.6, Neopentylglykol, bisethoxyliertes Neopentylglykol, Hydroxypivalinsäure-neopentylglykolester und Bis(hydroxymethyl)-cyclohexan, Monoanhydro-pentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen modifiziert werden. Während Polyalkohole mit primären OH-Gruppen sich bei geeigneter Katalyse direkt mit Polyglycidylethern umsetzen lassen, werden sekundäre OH-Gruppen zunächst mit Diisocyanat umgesetzt. Das erhaltene NCO-terminierte Reaktionsprodukt kann dann ohne Schwierigkeiten als Brücke zwischen 2 Mol Polyglycidylether unter Vergrößerung des Molekulargewichts eingebaut werden.

Eine ausführliche Aufzählung der geeigneten Epoxidverbindungen findet sich in den Handbüchern "Epoxidverbindungen und Harze" von A.M. Paquin, Springer Verlag Berlin 1958, Kapitel iV und "Handbook of Epoxy resins" von H.Lee, K. Neville, McGraw-Hill Book Company, New York 1982 Reissue, sowie "Epoxy resin chemistry and technology" von C.A. May, Marcel Dekker Inc., New York and Basel 1988.

Das Epoxidharz kann auch mit gesättigten oder ungesättigten Polycarbonsäuren und/oder Hydroxyalkylcarbonsäuren modifiziert sein. Aliphatische, cycloaliphatische und/oder aromatische Polycarbonsäuren verschiedener Kettenlänge sind beispielsweise Adipinsäure, Sebacinsäure. Fumarsäure, Isophthalsäure und dimere Fettsäure. Als Hydroxyalkylcarbonsäuren werden Milchsäure, Dimethylolpropionsäure oder auch carboxyl- und hydroxylgruppenhaltige Polyester verstanden. Bei der Umsetzung von überschüssigem Polyglycidylether mit niedrigem Molekulargewicht mit Polycarbonsäuren und/oder Polyalkoholen werden als Zwischenstufe modifizierte Polyglycidylether erhalten, die dann weiter mit Aminen und/oder Aminoalkoholen reagieren.

Es können auch heterocyclische Polyepoxidverbindungen verwendet werden, wie 1,3-Diglycidyl-5.5-dimethylhydantoin, Triglycidylisocyanurat oder Diepoxide aus Bisimiden. Eine andere geeignete Klasse von Polyepoxiden sind Polyglycidylether von phenolischen Novolakharzen, wodurch die Funktionalität von 2 bis auf etwa 6 Glycidylgruppen pro Molekül gesteigert werden kann. Durch Defunktionalisieren mit langkettigen Alkylphenolen wie Dodecylphenol können zusätzlich elastifizierende Elemente eingebaut werden. Auch können Polyglycidylester von Polycarbonsäuren wie Hexahydrophthalsäurediglycidylester, Tetrahydrophthalsäurediglycidylester oder Fumarsäurediglycidylester verwendet werden.

Das Einführen der Aminogruppen erfolgt entweder durch Addition von NH-reaktiven Verbindungen an die Epoxidgruppe oder durch Umsetzen der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkanol (vgl. DE-A-27 07 405) entstehen.

Als NH-reaktive Verbindungen werden verwendet primäre Amine wie Methylamin, Ethylamin, Propylamin, Butylamin, Octylamin, Monoethanolamin, 2-Ethylhexylamin, Dimethylaminopropylamin, Diethylaminoethylamin, Dimethylaminoneopentylamin oder Methoxypropylamin und/oder bevorzugt sekundäre Amine wie Dialkylamine, Monoalkylhydroxyalkylamine oder Dihydroxyalkylamine. Beispiele für solche Verbindungen sind Dimethylamin, Diethylamin, Dipropylamin, Dibutylamin, Methylbutylamin, Dimethylaminopropylamin, N-Methylaminoethanol oder Diethanolamin oder auch cyclische Amine, wie Morpholin oder Oxazolidin. Beim Einsatz der primären Amine reagiert das Amin in Abhängigkeit von den angebotenen stöchiometrischen Verhältnissen mit 1 bis 2 Epoxidgruppen unter Molekülvergrößerung.

Weiterhin können primäre Amine der allgemeinen Formel

H₂N-CR₁R₂-R₃-O(CHR₄-CHR₅O)ₙR₆

oder sekundäre Amine der allgemeinen Formel

H-NR₃-CR₁R₂-R₃-O(CHR₄-CH-R₅O)ₙ-R₃-CR₁R₂-R₃N-H

eingesetzt werden.

In dieser Formel stehen R₁ und R₂ für Wasserstoff, Alkyl- oder -CH₂-OH Gruppen, R₃ steht für einen linearen oder verzweigten Alkylenrest, insbesondere für einen Alkylenrest mit 1 bis 3 Kohlenstoffatomen, R₄ und R₅ stehen für Wasserstoff oder Alkylreste mit 1 bis 4 Kohlenstoffatomen, R₆ steht für Wasserstoff, einen Alkyl-, Cycloalkyl- oder Phenylrest, vorzugsweise für einen Alkylrest mit 1 bis 6 Kohlenstoffatomen und n=0-5. Als Beispiele für solche Monoamine werden genannt: Ethanolamin, Propanolamin, Butanolamin, Ethylenglycol(2-amino-ethyl)ether (H₂N-CH₂-CH₂-O-CH₂-CH₂-OH) und Diethylenglycolmono(3-aminopropyl)ether (H₂N-(CH₂)₃-O-CH₂-CH₂-O-CH₂-CH₂-OH). Beim Einsatz der primären Amine reagiert das Amin mit der Epoxidgruppe in Abhängigkeit von den angebotenen stöchiometrischen Verhältnissen unter Molekülvergrößerung. Als Beispiel für Diamine werden genannt: Jeffamine® M-Serie, Jeffamine® D-Serie und Jeffamine® ED-Serie.

Weiterhin kommen Di- oder Triamine mit primären und/oder sekundären Aminogruppen in Frage, wie z.B. Laurylpropylendiamin, Talgfettpropylendiamin.

Mit sekundären Diaminen tritt eine Kettenverlängerung ein. Als sekundäre Diamine, bevorzugt langkettige Diamine, werden N,N'-Dialkyldiaminoalkane wie z.B. N,N'-Bis(isohexyl)-1,6-diaminohexan, N,N'-Bis(isohexyl)isophorondiamin, N,N'-Bis(isohexyl)-dimethylhexamethylendiamin, N,N'-Bis(isohexyl)-2-methylpentamethylendiamin, N,N'-Bis(isohexyl)-ethylendiamin und N,N'-Bis(isohexyl)-di-(4-aminocyclohexyl)methan oder Umsetzungsprodukte von gesättigten Glycidylethern oder -estern oder Epoxyalkanen mit primären Diaminoalkanen verwendet wie das Additionsprodukt von Hexandiamin-1.6 oder 2-Methylpentamethylendiamin mit 2 Mol Glycidylester der Versaticsäure (α-verzweigte Monocarbonsäuren, besonders mit C₉-C₁₁).

Als Monoepoxide können für diesen Zweck auch gesättigte oder ungesättigte Glycidylether oder α-Epoxide verschiedener Kettenlänge wie Dodecan-1-oxid oder Butylenoxid eingesetzt werden. Die geeignete Zahl an Hydroxylgruppen entsteht dabei einmal automatisch aus der Epoxidgruppe bei der Addition der sekundären Aminogruppen, zum anderen kann sie durch Einsatz von Hydroxyalkylaminen gesteuert werden. Weiterhin können als sekundäre Diamine das Umsetzungsprodukt von 2 Mol 2-Ethylhexylamin mit 1 Mol Beckopox® EP 075 (Diglycidylether auf Basis von Propylenoxid) und/oder 1 Mol Beckopox® EP 140 sowie aliphatische sekundäre Diamine auf Basis von Propylenoxid-Addukten von Diolen oder Triolen, wie z.B. Novamin® -Typen zum Einsatz kommen.

Die Molverhältnisse zwischen Epoxid- und Aminogruppen haltigen Verbindungen sind so zu wählen, daß der vollständige Einbau des Amins gewährleistet ist, weil sonst durchbruchartige Oberflächenstörungen beim elektrophoretischen Beschichten auftreten können, d.h. ein geringfügiger Überschuß an Epoxidgruppen ist vorteilhaft.

Es können alle Amine gleichzeitig mit den Epoxidgruppen umgesetzt oder es kann stufenweise vorgegangen werden. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen.

Bei der Herstellung des Amino-Epoxid-Harzes geht man vorteilhafterweise so vor, daß man zunächst das Epoxid-Harz in einem oder mehreren radikalisch polymerisierbaren ethylenisch ungesättigten Monomeren A2) löst und dann mit den Aminen umsetzt.

Bei einer besonders bevorzugten Herstellungsvariante werden die in den ungesättigten Monomeren A2) gelösten Epoxidharze zu einer Mischung aus den entsprechenden Aminen, Bisphenol A und ethylenisch ungesättigten Monomeren A2) dosiert.

Für Vernetzungsreaktionen müssen in dem Amino-Epoxid-Harz stets Hydroxylgruppen vorhanden sein. Die im Molekül vorhandene Hydroxylzahl (ausgedrückt in mg KOH pro Gramm Festharz) ist maßgebend für die Vernetzungsfähigkeit des Films. Sie sollte über 50, vorzugsweise über 100, besonders vorteilhaft über 150 liegen. Die obere Grenze der Hydroxylzahl liegt bei 500, vorteilhafter unter 300. Ist die Hydroxylzahl zu niedrig, so entstehen bei der Vernetzung Filme, die noch in organischen Lösemitteln wie Methylethylketon löslich sind. Ist die Hydroxylzahl dagegen zu hoch, so wird der Film zu spröde und bleibt eventuell auch zu hydrophil. Im Molekül müssen mindestens zwei vernetzungsfähige, bevorzugt primäre Hydroxylgruppen vorliegen.

Die für den Vernetzungsprozeß wichtigen primären und/oder sekundären Hydroxylgruppen können anteilsweise durch primäre und/oder sekundäre Amino-gruppen ersetzt werden. Das Einführen von primären Aminogruppen in den Harzgrundkörper erfolgt vorzugsweise durch Umsetzen von mindestens ein, bevorzugt mindestens zwei Epoxidgruppen pro Molekül enthaltenden Harzen mit einem amino- und/oder hydroxylgruppenhaltigen Ketimin und/oder Aldimin und/oder Polyamin. Die Ketimine werden nach bekannten Methoden durch Wasserabspaltung aus den entsprechenden Polyaminen der allgemeinen Struktur R-NR-R-NH₂ oder den entsprechenden Aminoalkoholen der allgemeinen Struktur HO-R-NH₂ und den geeigneten aliphatischen Ketonen wie Diethylketon, Methylisobutylketon, Ethyl-n-propylketon oder auch Cyclopentanon, Cyclohexanon, Acetophenon usw. hergestellt. Bevorzugte Ketimine sind Umsetzungsprodukte aus Methylisobutylketon und Diethylentriamin. Die Reaktionsbedingungen (Reaktionstemperatur, Auswahl des Lösemittels) müssen so geführt werden, daß keine die Ketiminbindung zersetzende Substanzen wie Wasser in dem Reaktionsprodukt vorhanden bleiben.

Das Ketimin schützt die primäre Aminogruppe (vgl. US-A-3,523,925), so daß das Amin über eine weitere funktionelle Gruppe, z.B. eine Hydroxylgruppe oder bevorzugt eine sekundäre Aminogruppe ohne Schwierigkeiten mit dem Epoxidgrundharz umgesetzt werden kann. Durch die Wahl der Molverhältnisse der eingesetzten Komponenten muß gewährleistet sein, daß kein unumgesetztes niedrigmolekulares Amin im Ansatz zurückbleibt, weil sonst durchbruchartige Oberflächenstörungen beim elektrophoretischen Beschichten auftreten können. Die Reaktion der sekundären Aminogruppen des Polyaminoketimins mit der Epoxidgruppe beginnt schon bei Raumtemperatur und ist im allgemeinen exo therm. Um eine vollständige Umsetzung zu erreichen, ist es in der Regel notwendig, die Temperatur zeitweise auf 50 bis 120 °C zu erhöhen.

Die verkappten, ethylenisch ungesättigte Gruppen tragenden Polyisocyanate (Komponente A1) werden dadurch hergestellt, daß man ein Polyisocyanat mit mindestens einer stöchiometrischen Menge einer monofunktionellen, aktiven Wasserstoff (Zerewitinoff-Reaktion) enthaltenden Verbindung, im folgenden gesättigtes Verkappungsmittel genannt, umsetzt, wobei gegebenenfalls basische Katalysatoren wie tert. Amine oder geringe Mengen an Zinnsalzen wie Dibutylzinndilaurat zugegeben werden können. Eine der Isocyanatgruppen wird auf diese Weise bei Raumtemperatur gegen Reaktionen mit Wasser oder Alkoholen geschützt. Die Schutzgruppe spaltet sich bei Einbrenntemperaturen von über 110 °C bis unter 210 °C, vorzugsweise unter 190 °C, besonders unter 180 ° C, wieder ab, so daß eine (Vernetzungs)-Reaktion mit den Hydroxylgruppen des Basisharzes stattfinden kann.

Verbindungen, die die Isocyanate blockieren, enthalten nur eine freie Amin-, Amid-, Lactam-, Thio- oder Hydroxylgruppe. Hierfür haben sich beispielsweise bewährt aliphatische oder cycloaliphatische Alkohole wie Methanol, Ethanol, Propanol, Butanol, Pentanol, Hexanol, 2-Ethylhexanol, 2-Pyridinylcarbinol, Dialkylaminoalkohole wie Dimethylaminoethanol, Oxime wie Methylethylketoxime, Lactame wie ∈-Caprolactam oder Pyrrolidon-2, Imide wie Phthalimid oder N-Hydroxymaleinimid, Hydroxyalkylester, Malonsäure- oder Acetessigsäureester. Es werden aber auch β-Hydroxyglykole oder -glykolether und Glykolamide empfohlen.

Die noch verbleibenden freien Isocyanatgruppen werden in analoger Weise mit solchen Verkappungsmitteln blockiert, die neben einem aktiven Wasserstoffatom noch eine ungesättigte Gruppierung enthalten. Hierfür eignen sich insbesondere N-H- und OH-funktionelle, ungesättigte Monomere wie primäre und sekundäre Allylamine und/oder ungesättigte Alkohole, wie Hydroxylalkylacrylate, bevorzugt Hydroxyethyl(meth)acrylat oder Hydroxypropyl(meth)acrylat oder Hydroxybutyl(meth)acrylat oder monofunktionelle, ungesättigte Isocyanate wie z.B. Dimethyl-meta-isopropenylbenzylisocyanat (meta-TMI). Es können auch Umsetzungsprodukte von Maleinsäureanhydrid mit Diolen z.B. auf Basis Ethylenoxid und/- oder Propylenoxid oder Umsetzungsprodukte von Monoepoxiden wie z.B. Versaticsäureglycidylester mit Acryl- bzw. Methacrylsäure als ethylenisch ungesättigte Verkappungskomponente genutzt werden.

Als typische multifunktionelle Isocyanate eignen sich aliphatische, cycloaliphatische und/oder aromatische Polyisocyanate mit mindestens zwei Isocyanatgruppen pro Molekül. Als aromatische Diisocyanate eignen sich die Isomeren oder Isomerengemische von Phenylendiisocyanat, Toluylendiisocyanat, Xylylendiisocyanat, Biphenylendiisocyanat, Naphthylendiisocyanat und Diphenylmethandiisocyanat, Diphenyltetraisocyanat, bevorzugt Naphthyltetraisocyanat, Toluylen-, Isophoron- und Xylylendiisocyanat. Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat und Dicyclohexylmethan-diisocyanat sowie aliphatische Diisocyanate der allgemeinen Formel

O = C = N - (CR₂)ᵣ - N = C = O

worin r eine ganze Zahl von 2 bis 20, insbesondere 6 bis 8 ist und R Wasserstoff oder einen niedrigen Alkylrest mit 1 bis 8 C-Atomen, vorzugsweise 1 oder 2 C-Atomen dargestellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden Diphenylmethan- und Toluylendiisocyanat, und deren Isomerengemische sowie Isophorondiisocyanat, Dicyclohexylmethan-diisocyanat, Trimethylendiisocyanat, Tetramethylendiisocyanat und Hexamethylendiisocyanat. Vinylpolymerisate, die Isocyanatgruppen enthalten und durch Copolymerisation von z. B. Cyanato-ethyl(meth)acrylat oder Dimethyl-isopropylbenzylisocyanat mit Alkyl(meth)-acrylaten und/oder (Alkyl)vinylbenzolen entstehen, können auch verwendet werden. Ebenso sind gemischte aliphatische/aromatische Isocyanat-Verbindungen geeignet.

Besonders bevorzugt ist die Umsetzung von aromatischen Diisocyanaten mit Butylglycol und/oder Butyldiglycol zusammen mit Hydroxyethyl-(meth)-acrylat bzw. Hydroxypropyl-(meth)-acrylat bzw. Hydroxybutyl-(meth)acrylat. Man erhält dadurch bevorzugt Systeme, die im Bereich von 150 - 180 °C einbrennbar sind. Einbrenntemperaturen von 110 - 180 °C können bevorzugt durch Systeme auf Basis, von aliphatischen Diisocyanaten realisiert werden, die als Verkappungskomponente Methylethyl-, Methylisobutyl-, Dodecanon-ketoxim oder Hydroxyaceton bzw. Hydroxybutanon oder sekundäre Amine wie Dimethyl-, Diethyl-, Dipropyl-, Dibutyl-, Dipentyl- und Dihexylamine und Isomere davon, wie Diisopropylamin enthalten und bevorzugt mit ethylenisch ungesättigten Verbindungen wie Hydroxyethyl-(meth)-acrylat bzw. Hydroxypropyl-(meth)-acrylat bzw. Hydroxybutyl(meth)acrylat umgesetzt werden.

Bei 1 mol Diisocyanat ist das Verhältnis von gesättigter Verkappungskomponente zu ethylenisch ungesättigter Verkappungskomponente bevorzugt zwischen 1.95 : 0.05 und 0.05 : 1.95, besonders bevorzugt zwischen 1.50 : 0.50 und 1.05 : 0.95 mol.

Zur Synthese des verkappten Polyisocyanats A1) kann das entsprechende Isocyanat vor Zugabe der beiden Verkappungsmittel in den gegenüber der Isocyanatgruppe inerten, ungesättigten Monomeren A2) oder deren Mischungen gelöst werden. Alternativ hierzu kann das ungesättigte Monomere A2) auch nach der Addition des gesättigten Verkappungsmittels und des ethylenisch ungesättigten Verkappungsmittels an das Isocyanat zugegeben werden. Das ungesättigte Verkappungsmittel kann entweder zusammen mit dem gesättigten Verkappungsmittel zu dem entsprechenden Isocyanat dosiert werden oder umgekehrt.

Eine andere Variante besteht darin, daß zusätzlich zu den verkappten Polyisocyanaten A1) in stöchiometrisch geeigneter Weise weitere Polyisocyanate der oben beschriebenen Art mit den beschriebenen Monoalkoholen und/oder Aminen halbblockiert werden, wobei Umsetzungsprodukte von Butylglykol bzw. Butyldiglykol mit Toluylendiisocyanat und Methylethylketoxim mit Isophoron- und Tetramethyl-Xylylendiisocyanat bevorzugt sind. Die Halbverkappung kann lösemittelfrei in Substanz oder in den beschriebenen Monomeren durchgeführt werden. Solche halbblockierten Diisocyanate werden dann über die verbleibende NCO-Funktion entweder vor oder vorzugsweise nach der Umsetzung der Epoxydharze mit den Aminen an die freien Hydroxyl- bzw. Aminogruppen des Epoxyharzes bzw. des Amino-Epoxidharzes addiert, wobei diese Addition vorzugsweise in Gegenwart der Monomere A2) durchgeführt wird. Auf diese Weise erhält man sogenannte selbstvernetzende Systeme, die ebenfalls Gegenstand dieser Erfindung sind.

Als ungesättigte Monomere A2), die bereits bei der Synthese des Amino-Epoxid-harzes als auch bei der Synthese des verkappten Isocyanats vorhanden sein können bzw. nach deren Synthese zugegeben werden, kommen vorzugsweise Acryl- oder Methacrylsäureester von 1 bis 18 Kohlenstoffatome enthaltenden Monoalkoholen, vorzugsweise n-Butylmethacrylat, Methylmethacrylat, Isobutylacrylat, 2-Ethylhexylacrylat, insbesondere Butylacrylat in Betracht. Weitere geeignete Monomere sind Styrol, Vinyltoluol, α-Methylstyrol oder höher substituierte Styrole, wie z.B. 2,4-Dimethylstyrol, sowie Vinylester von 2 bis 15 Kohlenstoffatome enthaltenden Monocarbonsäuren, wie z.B. Vinylacetat, Vinylpropionat, Vinylpivalat, Vinylversatat. Bevorzugt sind hier insbesondere Styrol, Vinyltoluol und α-Methylstyrol. Weiterhin können als ungesättigte Monomere Hydroxy-C₂-C₄-alkylacrylate, bevorzugt Hydroxyethyl(meth)acrylat oder Hydroxypropyl(meth)acrylat oder ungesättigte 1,2-Epoxidgruppen enthaltende Monomere wie Glycidyl(meth)acrylat genommen werden. Monomere dieser Art können wegen ihrer reaktiven Gruppen erst nach Abschluß der Synthese des Amino-Epoxidharzes bzw. des verkappten Isocyanats zugefügt werden. Die Menge an ungesättigten Monomeren bzw, an Polymer A2) beträgt ca. 1 bis 80, vorzugsweise 5 bis 30 Gew.-%, bezogen auf die Gesamtmenge aller Komponenten deren Summe gleich 100 als Feststoff gerechnet ergibt.

Das Mischungsverhältnis der Komponenten B) zu A1) liegt bevorzugt zwischen 90 zu 10 und 60 : 40 Gew.-% und wird empirisch aus den optimal erreichbaren anwendungstechnischen Eigenschaften bei der gegebenen Einbrenntemperatur bestimmt. Die Komponenten B) und A1), bevorzugt deren Mischungen mit den ungesättigten Monomeren A2), können in dem beschriebenen Verhältnis entweder kalt gemischt werden oder Komponente A1) wird der in situ gefertigten Komponente B) bei höherer Temperatur zugesetzt. Anschließend werden in der Lackverarbeitung gebräuchliche Additive und Säuren zugegeben.

Die Vernetzung der OH-gruppenhaltigen Komponente B) mit den blockierten Polyisocyanaten A1) kann gegebenenfalls durch Zusatz von 0,01 bis 2 Gew.%, speziell 0,5 bis 1 Gew.%, bezogen auf die Summe der Komponenten B) und A1), stark basischer tertiärer Amine und/oder aktiver Metallverbindungen beschleunigt werden. Eine besondere, manchmal synergistische Wirkung wird erreicht, wenn das abgeschiedene OH-gruppenhaltige Harz in einem stark basischen Medium vorliegt und Metallsalze von Wismut, Blei, Kobalt, Eisen, Antimon und/oder Zinn-II- und -IV genommen werden. Besonders bevorzugt werden Katalysatoren wie Eisen-III-acetylacetonat, Dibutylzinn-dilaurat, Dibutylzinnoxid, Tri-n-butyl-zinn-oxid, Dibutylzinn-dioctylmaleat, Zinn-octoat, Zinnoleat, Tetrabutyltitanat, Cobalt-2-ethylhexoat und Umsetzungsprodukte von Wismuttrioxid mit Hydroxycarbonsäuren wie z.B: Milchsäure und/oder Dimethylolpropionsäure.

Durch Protonisieren mit Säuren wird das kationische Bindemittel in an sich bekannter Weise wasserverdünnbar gemacht. Beispiele für Säuren sind Ameisensäure, Milchsäure, Essigsäure, Propionsäure, Dimethylolpropionsäure, Oxalsäure, Zitronensäure, Malonsäure, Acrylsäure, Phosphorsäure oder Alkylphosphorsäure. Monobasische niedrigmolekulare organische Carbonsäuren werden bevorzugt. Es muß mindestens so viel Säure zugegeben werden, daß eine stabile Emulgierung des kationischen Basisharzes erfolgt. Ein Überschuß an Säure, d.h. ein Neutralisationsgrad über 100 %, ist zweckmäßig zu vermeiden. Der MEQ-Wert (Milliäquivalente Säure pro 100 g Festharz) liegt im allgemeinen zwischen 20 und 80. Es wird ein möglichst niedriger MEQ-Wert angestrebt, um ein möglichst hohes Abscheideäquivalent zu erhalten. Diese Mischung aus kationischem Harz B, ethylenisch ungesättigtem Monomer A2) und verkapptem Polyisocyanat A1) wird dann mit vorzugsweise 60 - 95 °C warmem, entmineralisierten Wasser zu einer Emulsion entweder durch direkte oder inverse Verdünnung weiterverarbeitet. in der entstandenen Emulsion werden durch Zugabe von Radikalbildnern anschließend die vorhandenen ungesättigten Monomere A2) nach bekannten Emulsionspolymerisationstechniken polymerisiert und man erhält 30 bis 60 %ige, vorzugsweise 30 bis 40 %ige Dispersionen. Anwendung als Radikal-Initiatoren können sowohl alle bekannten Redoxsysteme als auch thermisch zerfallende Radikalbildner wie Azoverbindungen, Peroxide, Persäureester und Hydroperoxide finden. Bevorzugt wird tert.-Butylhydroperoxid/Ascorbinsäure und tert. Amylhydroperoxid/Ascorbinsäure. Die Molekulargewichte der so erhaltenen polymeren Harze aus den Monomeren A2) liegen, bestimmt nach der Gelpermeationschromatographie-Methode, zwischen 10.000 und 2.000.000, vorzugsweise zwischen 30.000 und 600.000 g/mol. Zur Feineinstellung geeigneter Molgewichte können gegebenenfalls Regler eingesetzt werden, wie z.B. Alkohole, Polyether, Mercaptane oder unterphosphorige Säure. Die Polymerisationstemperaturen liegen im allgemeinen zwischen ca. 20 und 98 °C. Sie richten sich nach dem anzustrebenden Molekulargewichtsbereich und den verwendeten Polymerisationsinitiatoren und deren Wirkungsoptimum.

Für die Bereitstellung von Bindemittel für Elektrotauchlacke, die in einem Bereich von 110 -150 °C eingebrannt werden wird folgendes Verfahren besonders bevorzugt. Nach Herstellung der Komponente B in den ungesättigten Monomeren A2) wird mit Säure neutralisiert und mit vollentsalzten Wasser direkt oder invers verdünnt. Zu dieser Dispersion wird bei Temperaturen < 80 °C die auf Basis von aliphatischen Diisocyanaten mit den beschriebenen Alkoholen blockierte Komponente A1) zudosiert und diese neu entstandene Dispersion abschließend bei Temperaturen von < 80 °C durch Zugabe eines Initiators einer Emulsions- bzw. Suspensionspolymerisation unterworfen.

Die erfindungsgemäßen Dispersionen eignen sich ausgezeichnet als ionisch stabilisierte Bindemittel auf Wasserbasis. Besonders bevorzugt wird die Weiterverarbeitung zu Elektrotauchlacken, indem die wäßrige Bindemitteldispersion mit Pigmenten wie Titandioxid und Ruß und gegebenenfalls Katalysatoren, die beide vorzugsweise über eine wäßrige Pigmentpaste eingearbeitet werden, versetzt wird.

Die Herstellung von Pigmentpasten ist allgemein bekannt und braucht nicht näher erläutert zu werden, vergleiche dazu D.H. Parker, Principles of Surface Coating Technology, Interscience Publishers, New York (1965); R.L. Yates, Electropainting, Robert Draper Ltd., Teddington/England, (1966); H.F. Payne, Organic Coating Technology, Band 2, Wiley and Sons, New York (1961).

Diese Elektrotauchlacke auf der Basis der erfindungsgemäßen Dispersionen können Bleisilikat als Korrosionsschutzpigment enthalten. Ein besonderer Vorteil liegt jedoch darin, daß die erfindungsgemäßen Dispersionen sich für bleifreie Elektrotauchlacke eignen.

### Herstellungsbeispiele:

### 1. 1 Herstellung der Vernetzer

### Vernetzer B-1

In einem Reaktionsgefäß, das mit Rührer, Thermometer, Tropftrichter und Rückflußkühler ausgerüstet ist, werden zu 174 g Toluylendiisocyanat (TDI), und 0,05 g DBTL (Dibutylzinnlaurat), 243 g Butyldiglykol, 0,59 g Hydrochinon und 65 g Hydroxyethylmethacrylat bei Raumtemperatur unter Pressluftgegenstrom so zudosiert, daß die Innentemperatur 70 °C nicht übersteigt. Man hält solange bei 70 °C bis ein NCO-Wert von < 0,1 % erreicht ist und verdünnt anschließend mit 30,9 g n-Dodecylmercaptan.
Festkörper: 94 Gew.-%

### Vernetzer B-2

In einem Reaktionsgefäß, das mit Rührer, Thermometer, Tropftrichter und Rückflußkühler ausgerüstet ist, werden 250 g Diphenylmethandiisocyanat (Desmodur® M 44) bei 45 °C aufgeschmoizen. Sobald eine homogene Schmelze gebildet ist, werden 0,05 g DBTL (Dibutylzinnlaurat) zugemischt, anschließend werden 243 g Butyldiglykol, 0,59 g Hydrochinon und 65 g Hydroxyethylmethacrylat unter Pressluftgegenstrom so zudosiert, daß die Innentemperatur 70 °C nicht übersteigt. Man hält solange bei 70 °C bis ein NCO-Wert von < 0,1 % erreicht ist und verdünnt anschließend mit 31,3 g n-Dodecylmercaptan.
Festkörper: 95 Gew.-%

### Vernetzer B-3

In einem Reaktionsgefäß, das mit Rührer, Thermometer, Tropftrichter und Rückflußkühler ausgerüstet ist, werden zu einer Mischung von 244 g Tetramethylxylylendiisocyanat (TMXDI) und 0,05 g DBTL (Dibutylzinnlaurat), 130,5 g Methylethylketoxim, 0,59 g Hydrochinon und 65 g Hydroxyethylmethacrylat bei Raumtemperatur unter Pressluftgegenstrom so zudosiert, daß die Innentemperatur 70 °C nicht übersieigt. Man hält solange bei 70 °C bis ein NCO-Wert von < 0,1% erreicht ist und anschließend mit 29,6 g n-Dodecylmercaptan verdünnt. Festkörper: 94 Gew.-%

### Vergleichsbeispiel:

### Vernetzer B-5 (trimer in Toluol)

In einem Reaktionsgefäß, das mit Rührer, Thermometer, Tropftrichter und Rückflußkühler ausgerüstet ist, werden zu einer Lösung aus 119,1 g Toluylendiisocyanat (TDI), 0,05 g DBTL (Dibutylzinnlaurat) in 57,74 g Toluol bei Raumtemperatur 80,91 g Butylglycol so zudosiert, daß die Innentemperatur 50 °C nicht übersteigt. Sobald ein NCO-Wert von 12.48 % (kalkuliert auf Festharz) erreicht ist, werden 30,63 g Trimethylolpropan in 3 Portionen zugesetzt. Anschließend hält man die Temperatur solange unterhalb von 90 °C bis ein NCO-Wert von < 0,2 % erreicht ist. Danach verdünnt man mit 66,40 g Methoxypropanol. Festkörper: 65,0 Gew.-%

### 1.2. Herstellung des Aminoepoxidharzes

### Aminoepoxidharz A1:

In einem Reaktionsgefäß, das mit Rührer, Thermometer, Tropftrichter und Rückflußkühler ausgerüstet ist, werden zu einer Lösung aus 428,62 g Polygycidylether auf Basis Bisphenol A mit einem Epoxidequivalentgewicht von 472, 142,27 g Styrol und 0,40 g lonol, 31,78 g Diethanolamin bei 40 °C zudosiert. Anschließend werden 15,44 g Dimethylaminopropylamin und 93,23 g eines Adduktes von 116 g 1,6-Diaminohexan mit 500 g Cardura® E 10 (Glycidester einer alpha verzweigten C-9 - C-11 Monocarbonsäure), bei 40 - 50 °C zugesetzt und die Lösung langsam auf 90 - 100 °C aufgeheizt. Zur Vervollständigung der Reaktion hält man die angegebene Temperatur noch 3 Stunden. Der Epoxidgehalt ist dann Null.
Aminzahl: 98 (mg KOH/g Festharz)
Festkörper: 80,00 Gew.-%.

### Aminoepoxidharz A2:

In einem Reaktionsgefäß, das mit Rührer, Thermometer, Tropftrichter und Rückflußkühler ausgerüstet ist, wird eine auf 100 °C erwärmte Lösung aus 45,45 g Bisphenol A, 31,78 g Diethanolamin, 15,44 g Dimethylaminopropylamin und 93,23 g eines Addukts von 116 g 1,6-Diaminohexan mit 500 g Cardura® E 10 (Glycidester einer alpha verzweigten C-9 - C-11 Monocarbonsäure) in 71,14 g Styrol langsam mit einer Mischung aus 332,18 g Epikote 828 (Bisphenol A-diglycidylether) in 71,14 g Styrol versetzt. Die dabei auftretende Exothermie nutzt man um die Temperatur auf 120 °C aufzuheizen. Zur Vervollständigung der Reaktion hält man die angegebene Temperatur noch 2 Stunden. Der Epoxidgehalt ist dann Null.
Aminzahl: 98 (mg KOH/g Festharz)
Festkörper: 80 Gew.-%.

### Vergleichsbeispiel:

### Aminoepoxidharz A3:

In einem Reaktionsgefäß, das mit Rührer, Thermometer, Tropftrichter und Rückflußkühler ausgerüstet ist, werden zu einer Lösung aus 566,4 g Polygycidylether auf Basis Bisphenol A mit einem Epoxidequivalentgewicht von 472, in 322,0 g Methoxypropanol, 42,00 g Diethanolamin bei 40 °C zudosiert. Anschließend werden 20,4 g Dimethylaminopropylamin und 123,2 g eines Adduktes von 116 g 1,6-Diaminohexan mit 500 g Cardura® E 10 (Glycidester einer alpha verzweigten C-9 - C-11 Monocarbonsäure) bei 40 - 50 °C zugesetzt und die Lösung langsam auf 90-100 °C aufgeheizt. Zur Vervollständigung der Reaktion hält man die angegebene Temperatur noch 3 Stunden. Der Epoxidgehalt ist dann Null.
Aminzahl: 98 (mg KOH/g Festharz)
Festkörper: 70 Gew.-%.

### 1.3 Wäßrige Dispersionen

### D-1, D-2, D-4 und D-5:

In einem Reaktionsgefäß, das mit Rührer, Thermometer, Tropftrichter und Rückflußkühler ausgerüstet ist, wird die auf 90 - 100 °C erwärmte Lösung des Amino-epoxidharzes A in Styrol mit dem Vernetzer B versetzt und diese Mischung mit 16,24 g 85 %ige Ameisensäure neutralisiert. Anschließend wird die in Tabelle 1 angegebene Menge entmineralisiertes Wasser untergemischt und bei 90 °C die angegebene Menge Initiatorlösung von Ascorbinsäure/tert.Butylhydroperoxid in 100 g entmineralisiertem Wasser über 0,5 Stunden zudosiert und bei 90 °C solange polymerisiert bis sich ein konstanter Festkörpergehalt (Einwaage 1-2 g, Bed.: 125 °C, 1 h) ergibt. Nach dieser allgemeinen Vorschrift werden die in Tabelle 1 dargestellten Dispersionen D-1, D-2, D-4 und D-5 erhalten.

In der nachfolgenden Tabelle 1 bedeuten die mit * gekennzeichneten Abkürzungen:
- MEQ:: Säuregehalt bezogen auf Mol des Feststoffs (Einheit: mmol/100 g)
- Restmonomer:: Massengehalt an Restmonomeren bezogen auf die Masse der Dispersion (Einheit: %)

**Tabelle 1**

| Dispersion | Epoxyamin | Vernetzer | Deionisiertes Wasser | Initiatormischung | Reaktionszeit bei °C | Festkörper (1h, 125°C) | MEQ* | *Restmonomer |
|---|---|---|---|---|---|---|---|---|
| D-1 | 765,89 g A-1 | 249,11 g B-1 | 1758 g | 2,19 g | 2 h, 90 | 35 Gew.-% | 30 | <0,5% |
| D-2 | 765,89 g A-1 | 286,24 g B-2 MDI | 1758 g | 2,19 g | 2 h, 90 | " | " | " |
| D-3 | 774,39 g A-1 | 230,02 g B-3 | 1758 g | 2,26 g | 4 h, 75 | " | " | " |
| D-4 | 765,89 g A-2 | 249,11 g B-1 | 1758 g | 2,19 g | 2 h, 90 | 35 Gew.-% | 30 | < 0,5% |
| D-5 | 765,89 g A-2 | 286, 24 g B-2 MDI | 1758 g | 2,19 g | 2 h, 90 | " | " | " |
| D-6 | 774,39 g A-2 | 230,02 g B-3 | 1758 g | 2,26 g | 4 h, 75 | " | " | " |

### D-3 und D-6:

### Wässrige Dispersion D-3 und D-6 mit Niedrigtemperatur-Härter B-3:

In einem Reaktionsgefäß, das mit Rührer, Thermometer, Tropftrichter und Rückflußkühler ausgerüstet ist, wird die auf 90 - 100 °C erwärmte Lösung des Amino-epoxidharzes A in Styrol mit 16,24 g 85 %ige Ameisensäure neutralisiert und mit der in Tabelle 1 angegebenen Menge entmineralisiertem Wasser versetzt, so daß die Innentemperatur auf 70 - 75 °C fällt. Dann setzt man den Vernetzer B-3 langsam zu und mischt bei 70 °C die angegebene entsprechende Menge Initiatorlösung (Ascorbinsäure/tert.Butylhydroperoxid in 100 g entmineralisiertem Wasser) über 0,5 Stunden unter. Abschließend wird bei 70 °C solange polymerisiert bis sich ein konstanter Festkörpergehalt (Einwaage 1-2 g, Bed.: 125 °C, 1 h) ergibt. Nach dieser allgemeinen Vorschrift werden die in Tabelle 1 dargestellten Dispersionen D-3 und D-6 erhalten.

### 1.4 Wäßrige Dispersion D-7 (Vergleichsbeispiel):

### Verfahren angelehnt an EP-A 67 312)

In einem Reaktionsgefäß, das mit Rührer, Thermometer, Tropftrichter und Rückflußkühler ausgerüstet ist, wird aus einer auf 80 - 85 °C aufgeheizten Mischung von 813,27 g des Aminoepoxidharzes A-2, 47,0 g Texanol, 18,9 g 2-Ethylhexanol und 355,15 g des Vernetzers B-5 das Lösemittel unter Vakuum ausdestilliert. Sobald mehr als 90 % des Lösemittels aufgefangen sind, setzt man 96 g Styrol und 48 g Butylacrylat zu, neutralisiert mit 15,3 g 85 %ige Ameisensäure, und dispergiert unter kontinuierlicher Zugabe von 1552,0 g entmineralisiertem Wasser.

Nach Zugabe von 1,69 g Ascorbinsäure/tert.Butylhydroperoxid in 100 g vollentsalztem Wasser über 0,5 Stunden wird bei 90 °C solange polymerisiert bis sich ein konstanter Festkörpergehalt (Einwaage 1-2 g, Bed.: 125 °C, 1 h) ergibt. Festkörper: 35 Gew.-%
MEQ 30

| Rest-LM (gaschromatographisch): | |
|---|---|
| MOP | 2,0 - 2,5 % |
| Toluol | 0,2 - 0,5 % |
| Summe | 2,2 - 3,0 % |

### 2. Herstellung einer Pigmentpaste

### 2.1. Herstellung eines Pastenharzes

**2.1.1.** Zu einer Lösung von 204 Teilen (2mol) N,N-Dimethylaminopropylamin in 1224 Teilen Ethoxypropanol werden bei 60 - 80 °C während einer Stunde 1708 Teile (4 mol) Denacol EX-145 (Phenol-(EO5)-glycidylether) einlaufen gelassen und anschließend bei 80 - 100 °C gehalten bis eine EP-Zahl von praktisch 0 erreicht ist (Aminzahl ca. 117 mg KOH/g Feststoff; ca. 50 %ig).

Zu dieser Lösung werden 2464 Teile des unter 2.1.2 hergestellten Addukts eingetragen und diese Mischung bei 60 - 80 °C solange gehalten bis eine Säure- und Epoxyzahl von praktisch 0 erreicht wird. Anschließend wird das Lösemittel im Vakuum entfernt, 128 Teile Butylglycol und 400 Teile Milchsäure (90 %) zugesetzt. Die Dispergierung erfolgt durch kontinuierliche Zugabe von 2245,24 Teilen vollentsalzten Wasser, so daß sich ein Festkörpergehalt von 55 % eingestellt.

**2.1.2.** 1280 Teile (2 Äquivalente Epoxid) Beckopox® SEP 311 (75 %ig in Xylol) werden auf 80 °C erwärmt. Zu dieser Lösung werden während einer Stunde 1184 Teile des Urethans nach 2.1.3. (75 %ig) einlaufen gelassen und bei 80 °C gehalten bis der %NCO-Wert praktisch 0 ist. Anschließend wird im Vakuum vom Lösemittel befreit und mit 1232 Teilen Ethoxypropanol auf ca. 60 % verdünnt.

**2.1.3.** Zu 348 Teilen Desmodur® T 80 (80 % 2,4-, 20 % 2,6-Toluylendiisocyanat) in 296 Teilen Xylol werden bei 40 - 60 °C 540 Teile Iso-Octadecylalkohol und 0,9 Teile Dibutylzinnlaurat während einer Stunde einlaufen gelassen und anschließend bis zu einem %NCO-Wert von ca. 9,5 bei dieser Temperatur gehalten (ca. 75 %ig).

### 2.2. Herstellung der bleifreien Pigmentpaste P-1

In einem mit einem Rührer ausgestatten Gefäß werden 13,88 Teile Bindemittel nach 2.1.1.; 3,13 Teile Texanol, 0,84 Teile Essigsäure (50 %ig) und 1,97 Teile einer 1:1-Mischung von 2,4,7,9-Tetramethyl-5-decin-4,7-diol (Surfynol® 104, Netzmittel), und Sektol® vorgelegt. Zu dieser Mischung werden unter Rühren 3,66 Teile Dibutylzinnoxid, 0,31 Teile Ruß, 38,14 Teile Titandioxid, 0,61 Teile Aerosil und 37,45 Teile vollentsalztes Wasser zudosiert. Nach einstündigem Rühren wird die Pigmentpastenmischung unter Kühlung auf einer Perlmühle 1 Stunde vermahlen (SAZ-Perlen: 0.1 mm).

### 2.3. Herstellung der bleihaltigen Pigmentpaste P-2

In einem mit einem Rührer ausgestatten Gefäß werden 13,88 Teile Bindemittel nach 2.1.1.; 3,13 Teile Texanol, 0,84 Teile Essigsäure (50%ig) und 1,97 Teile einer 1:1-Mischung von 2,4,7,9-Tetramethyl-5-decin-4,7-diol (Surfynol® 104, Netzmittel), und Sektol® vorgelegt. Zu dieser Mischung werden unter Rühren 3,66 Teile Dibutylzinnoxid , 0,31 Teile Ruß, 3,67 Teile Bleisilikat, 38,14 Teile Titandioxid, 0,61 Teile Aerosil und 33,78 Teile vollentsalztes Wasser zudosiert. Nach einstündigem Rühren wird die Pigmentpastenmischung unter Kühlung auf einer Perlmühle 1 Stunde vermahlen (SAZ-Perlen: 0,1 mm).

### 3.1 Formulierung der bleifreien KTL-Lacke L-1 bis L-6

In einem mit Rührer ausgestatteten Becherglas werden 1268,57 Teile der 35 %-igen Bindemitteldispersion (D-1 -D-6) vorgelegt, mit 1,5 g Ameisensäure (50 %) versetzt und mit 2010,93 Teilen vollentsalzten Wasser verdünnt. Anschließend setzt man 418,80 Teile der unter Punkt 2.2 hergestellten Pigmentpaste P-1 zu.

### 3.2 Herstellung der bleihaltigen KTL-Lacke L-7 bis L-12

In einem mit Rührer ausgestatteten Becherglas werden 1268,57 Teile der 35 % igen Bindemitteldispersion (D-1 - D-6) vorgelegt, mit 1,5 g Ameisensäure (50 %) versetzt und mit 2010,93 Teilen vollentsalzten Wasser verdünnt. Anschließend setzt man 418,80 Teile der unter Punkt 2.3 hergestellten Pigmentpaste (P-2) zu.

### 3.3 Herstellung eines bleifreien KTL-Lacks L-13

In einem mit Rührer ausgestatteten Becherglas werden 1268,57 Teile der 35 % igen Bindemitteldispersion (D-7) vorgelegt, mit 1,5 g Ameisensäure (50 %) versetzt und mit 2010,93 Teilen vollentsalzten Wasser verdünnt. Anschließend setzt man 418,80 Teile der unter Punkt 2.3 hergestellten Pigmentpaste (P-1) zu.

### 3.4 Herstellung eines bleihaltigen KTL-Lacks L-14

Die Herstellung dieses Lacks erfolgte mit den gleichen Komponenten wie bei KTL-Lack L-13, jedoch mit Pigmentpaste (P-2) anstelle von Pigmentpaste (P-1).

### 4. Abscheideergebnisse:

Auf als Kathode geschalteten Eisenblankblechen wurde bei 225 V 2,5 Minuten bei einer Badtemperatur von 32 °C beschichtet, mit Wasser abgespült und 30 Minuten bei 170 °C (Lacke 1, 2, 4, 5, 7, 8, 10, 11, 13, 14) bzw. bei 140 °C (Lacke 3, 6, 9, 12) eingebrannt. Die eingebrannten Filme zeigten eine Trockenfilmstärke von 20 *µ*m und keine Krater.

Die anwendungstechnischen Ergebnisse der bleifrei formulierten KTL-Lacke (L-1 - L-6) und der bleihaltigen KTL-Lacke (L-7 - L-12) sind in Tabelle 2 und Tabelle 3 zusammengefaßt:

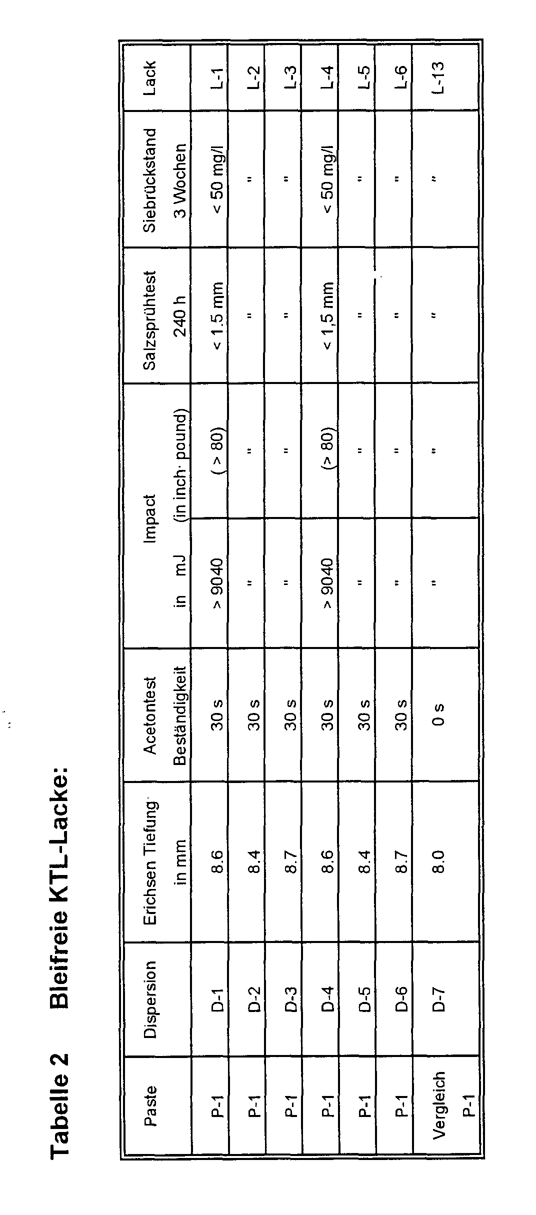

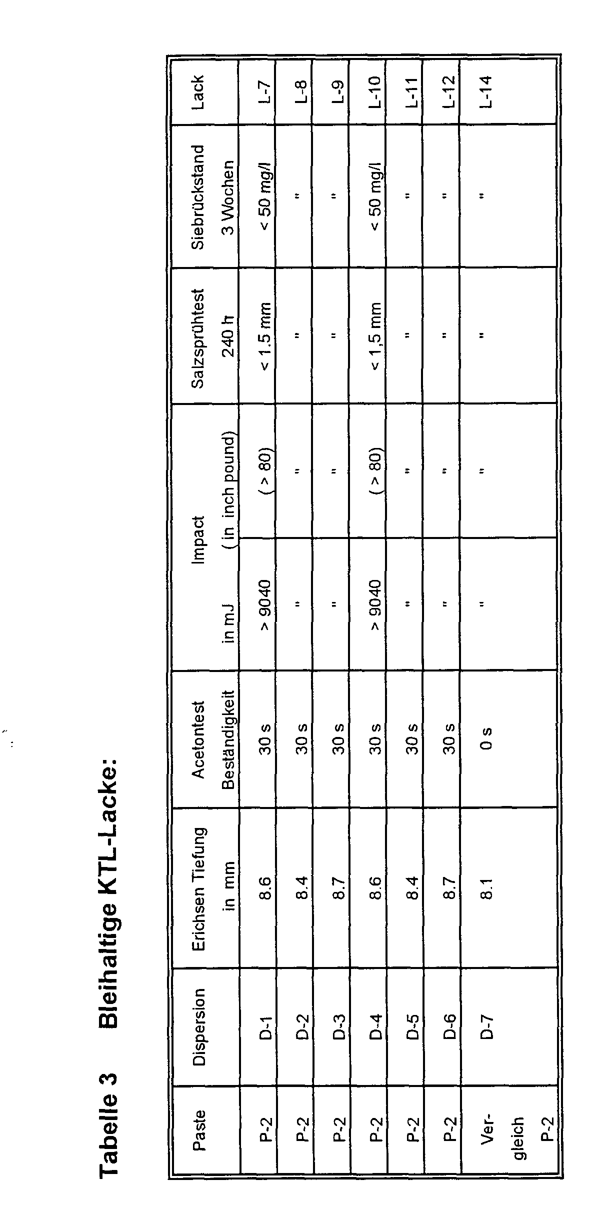

## Patentansprüche

1. Lösemittelfreie, wäßrige Kunstharzdispersionen enthaltend ein Polymer A), das erhalten wird durch Polymerisation von
A1) vollständig verkappten Polyisocyanaten, wobei ein Teil der Verkappungsgruppen eine ethylenisch ungesättigte Gruppe enthält, und
A2) ethylenisch ungesättigten Monomeren,
in Gegenwart eines ionischen Harzes B), wobei je 1 mol des Polyisocyanates mindestens 1 mol eines gesättigten Verkappungsmittels eingesetzt wird und die verbleibenden Isocyanatgruppen mit solchen Verkappungsmitteln blockiert werden, die neben einem aktiven Wasserstoffatom noch eine ungesättigte Gruppierung enthalten.

2. Kunstharzdispersion nach Anspruch 1, **dadurch gekennzeichnet, daß** das ionische Harz B ein kationisches Harz ist.

3. Kunstharzdispersion nach Anspruch 1, **dadurch gekennzeichnet, daß** das ionische Harz B ein Amino-Epoxid-Harz ist.

4. Verfahren zur Herstellung der Kunstharzdispersionen nach Anspruch 1, **dadurch gekennzeichnet, daß** man eine Mischung aus einem ionischen Harz und mindestens einem ethylenisch ungesättigten Monomer mit einem vollständig verkappten Polyisocyanat, wobei je 1 mol des Polyisocyanates mindestens 1 mol eines gesättigten Verkappungsmittels eingesetzt wird und die verbleibenden Isocyanatgruppen mit solchen Verkappungsmitteln blockiert werden, die neben einem aktiven Wasserstoffatom noch eine ungesättigte Gruppierung enthalten, vermischt, diese Mischung in eine wäßrige Dispersion überführt und anschließend sämtliche ethylenisch ungesättigten Gruppen mittels Emulsionspolymerisation polymerisiert.

5. Verfahren zur Herstellung der Kunstharzdispersionen nach Anspruch 1, **dadurch gekennzeichnet, daß** man eine Mischung aus einem ionischen Harz und mindestens einem ethylenisch ungesättigten Monomer neutralisiert, in Wasser dispergiert, zu dieser Dispersion ein vollständig verkapptes Polyisocyanat gibt, wobei je 1 mol des Polyisocyanates mindestens 1 mol eines gesättigten Verkappungsmittels eingesetzt wird und die verbleibenden Isocyanatgruppen mit solchen Verkappungsmitteln blockiert werden, die neben einem aktiven Wasserstoffatom noch eine ungesättigte Gruppierung enthalten, und anschließend sämtliche ethylenisch ungesättigten Gruppen mittels Emulsionspolymerisation polymerisiert.

6. Verwendung der Kunstharzdispersion nach Anspruch 1 als Bindemittel in Elektrotauchlackbädern.

7. Verwendung der Kunstharzdispersion nach Anspruch 1 als Bindemittel in bleifreien kationischen Elektrotauchlackbädern.

8. Gegenstände, die mit einer Kunstharzdispersion gemäß Anspruch 1 beschichtet sind.

## Claims

1. A solvent-free, aqueous synthetic-resin dispersion comprising a polymer A) which is obtained by polymerization of
A1) fully capped polyisocyanates in which some of the capping groups contain an ethylenically unsaturated group, and
A2)ethylenically unsaturated monomers in the presence of an ionic resin B), where at least 1 mol of a saturated masking agent is used per mole of the polyisocyanate and the remaining isocyanate groups are blocked with masking agents containing an unsaturated group as well as an active hydrogen atom.

2. A synthetic-resin dispersion as claimed in claim 1, wherein the ionic resin B is a cationic resin.

3. A synthetic-resin dispersion as claimed in claim 1, wherein the ionic resin B is an amino-epoxy resin.

4. A process for the preparation of a synthetic-resin dispersion as claimed in claim 1, which comprises mixing a mixture of an ionic resin and at least one ethylenically unsaturated monomer with a fully capped polyisocyanate, where at least 1 mol of a saturated masking agent is used per mole of the polyisocyanate and the remaining isocyanate groups are blocked with masking agents containing an unsaturated group as well as an active hydrogen atom, converting this mixture to an aqueous dispersion and then carrying out polymerization of all of the ethylenically unsaturated groups by means of emulsion polymerization.

5. A process for the preparation of a synthetic-resin dispersion as claimed in claim 1, which comprises neutralizing a mixture of an ionic resin and at least one ethylenically unsaturated monomer, dispersing the product in water, adding to this dispersion a fully capped polyisocyanate, where at least 1 mol of a saturated masking agent is used per mole of the polyisocyanate and the remaining isocyanate groups are blocked with masking agents containing an unsaturated group as well as an active hydrogen atom, and then polymerizing of all of the ethylenically unsaturated groups by means of emulsion polymerization.

6. The use of a synthetic-resin dispersion as claimed in claim 1 as binder in electrodeposition coating baths.

7. The use of a synthetic-resin dispersion as claimed in claim 1 as binder in lead-free cationic electrodeposition coating baths.

8. An article coated with a synthetic-resin dispersion as claimed in claim 1.

## Revendications

1. Dispersions aqueuses de résines synthétiques, sans solvant, contenant un polymère A) que l'on obtient par polymérisation
A1) de polyisocyanates complètement coiffés, une partie des groupes de coiffage contenant un groupe à insaturation éthylénique, et
A2) de monomères à insaturation éthylénique,
en présence d'une résine ionique B), en utilisant à chaque fois par 1 mole du polyisocyanate au moins 1 mole d'un agent de coiffage saturé et les groupes isocyanato restants étant bloqués par de tels agents de coiffage qui contiennent, outre un atome d'hydrogène actif, encore un groupement insaturé.

2. Dispersion de résine synthétique selon la revendication 1, **caractérisée en ce que** la résine ionique B est une résine cationique.

3. Dispersion de résine synthétique selon la revendication 1, **caractérisée en ce que** la résine ionique B est une résine amino-époxyde.

4. Procédé pour la préparation de dispersions de résines synthétiques selon la revendication 1, **caractérisé en ce qu'**on mélange un mélange d'une résine ionique et d'au moins un monomère à insaturation éthylénique avec un polyisocyanate complètement coiffé, en utilisant à chaque fois par 1 mole du polyisocyanate au moins 1 mole d'un agent de coiffage saturé et en bloquant les groupes isocyanato restants par de tels agents de coiffage qui contiennent encore, outre un atome d'hydrogène actif, un groupement insaturé, on transforme ce mélange en une dispersion aqueuse et ensuite on polymérise l'ensemble des groupes à insaturation éthylénique par polymérisation en émulsion.

5. Procédé pour la préparation de dispersions de résines synthétiques selon la revendication 1, **caractérisé en ce qu'**on neutralise un mélange d'une résine ionique et d'au moins un monomère à insaturation éthylénique, on disperse dans l'eau, on ajoute à cette dispersion un polyisocyanate complètement coiffé en utilisant à chaque fois par 1 mole du polyisocyanate au moins 1 mole d'un agent de coiffage saturé et on bloque les groupes isocyanato restants par de tels agents de coiffage qui contiennent encore, outre un atome d'hydrogène actif, un groupement insaturé, et ensuite on polymérise l'ensemble des groupes à insaturation éthylénique par polymérisation en émulsion.

6. Utilisation de la dispersion de résine synthétique selon la revendication 1 comme liant dans des bains de laquage par trempage électrophorétique.

7. Utilisation de la dispersion de résine synthétique selon la revendication 1 comme liant dans des bains de laquage par trempage électrophorétique sans plomb.

8. Objets revêtus d'une dispersion de résine synthétique selon la revendication 1.
